# EUROPÄISCHE PATENTSCHRIFT

(11) **EP 3 639 178 B1**
(45) Veröffentlichungstag und Bekanntmachung des Hinweises auf die Patenterteilung: **06.11.2024**
(21) Anmeldenummer: 18729709.8
(22) Anmeldetag: 15.06.2018
(51) Int. Cl.: G06F 21/32, G06F 21/62, G06F 21/74, G06F 21/83

(54) **COMPUTERIMPLEMENTIERTES VERFAHREN UND COMPUTERPROGRAMMPRODUKT ZUR ZUGANGSSTEUERUNG EINES ENDGERÄTS**
COMPUTER-IMPLEMENTED METHOD AND COMPUTER PROGRAM PRODUCT FOR CONTROLLING ACCESS TO A TERMINAL
PROCÉDÉ EXÉCUTÉ PAR ORDINATEUR ET PRODUIT-PROGRAMME INFORMATIQUE DESTINÉ AU CONTRÔLE D'ACCÈS D'UN TERMINAL

(30) Priorität: 16.06.2017 EP 17176421
(43) Veröffentlichungstag der Anmeldung: 22.04.2020
(73) Patentinhaber: Bremer, Wiebke, 21335 Lüneburg (DE)
(72) Erfinder: WANECK, Peter, 6315 Oberägeri (CH)
(74) Vertreter: SONN Patentanwälte GmbH & Co KG
(86) Internationale Anmeldenummer: PCT/EP2018/065931
(87) Internationale Veröffentlichungsnummer: WO 2018/229246

(56) Entgegenhaltungen:
- EP-A1- 2 927 835
- EP-A2- 1 703 431
- US-A1- 2010 124 363
- US-A1- 2017 046 507
- 0925295 MATRIKELNUMMER ET AL: "Confidential Desktop Towards an access control framework for preserving data confidentiality based on environmental conditions Diplom-Ingenieurin im Rahmen des Studiums Sophie Weiß BSc", 17 December 2015 (2015-12-17), pages 1 - 99, XP055874754, Retrieved from the Internet <URL:https://repositum.tuwien.at/bitstream/20.500.12708/2376/2/Weiss%20Sophie%20-%202015%20-%20Confidential%20desktop%20towards%20an%20access%20control%20framework...pdf> [retrieved on 20211220]

## Beschreibung

Die Erfindung betrifft ein computerimplementiertes Verfahren zur Zugangssteuerung eines Endgeräts, wobei auf dem Endgerät private Daten und sonstige Daten gespeichert sind und ein Zugang zu den privaten Daten eingeschränkt oder uneingeschränkt sein kann, umfassend die folgenden Schritte bei uneingeschränktem Zugang: Erfassen eines Bildsignals mit einer Kamera des Endgeräts; Durchführen einer Gesichtsdetektion mit dem erfassten Bildsignal; kontinuierliches Überwachen der bei der Gesichtsdetektion ermittelten Anzahl der Gesichter in dem erfassten Bildsignal, wobei der Zugang eingeschränkt wird, wenn die Anzahl der Gesichter größer als eins ist, wobei das Endgerät einen Bildschirm zur Anzeige von privaten und sonstigen Daten aufweist und die privaten Daten bei eingeschränktem Zugang vollständig ausgeblendet werden und nur die sonstigen Daten angezeigt werden.

Das Endgerät kann ein Computer, Terminal, insbesondere ein mobiles Endgerät, z.B. ein Smartphone oder ein Tabletcomputer, sein. Private Daten sind in diesem Zusammenhang als privat markierte, auf dem Endgerät gespeicherte oder von dem Endgerät empfangene und zwischengespeicherte Daten. Beispielsweise kann ein Kontakt aus einem Adressbuch eines Smartphones als privat markiert werden (ein privater Kontakt) und dadurch automatisch sämtliche mit dem als privat markierten Kontakt assoziierte Daten (z.B. Kontaktinformationen, Chatanzeigen, Anrufsignalisierung, Standort, etc.) ebenfalls als privat markiert werden. Solche privaten Daten sind typischer Weise lokal am Endgerät und voll verschlüsselt gespeichert. Dadurch kann eine Umgehung der Zugangssteuerung erschwert oder vermieden werden.

Als Gesichtsdetektion wird in diesem Zusammenhang ein bekanntes Bildanalyseverfahren verstanden. Derartige Verfahren werden häufig, z.B. bei Digitalkameras, zur Lokalisation eines Gesichts in einem Bild (Gesichtslokalisation) eingesetzt. Im vorliegenden Zusammenhang ist die Position der Gesichter nur von untergeordneter Bedeutung. Im Wesentlichen bezeichnet die Gesichtsdetektion eine automatische Erkennung (im Sinne einer Feststellung, nicht einer Identifikation) eines oder mehrerer Gesichter in einem Bild. Diese gelingt üblicherweise z.B. anhand von Bewegung, typischer Formen (oval) und Farben (Hautpigmente) und/oder Erkennung und Bewertung von Anordnung und Abstand der Augen. Demgegenüber betrifft die Gesichtsidentifikation eine Zuordnung eines Gesichts zu einer bestimmten Person. Eine Gesichtsidentifikation ist ein biometrisches Verfahren und kann z.B. als biometrischer Faktor für die Authentifizierung von Personen verwendet werden. Dabei werden beispielsweise biometrische Merkmale eines Gesichts mit den gespeicherten Merkmalen eines bekannten Gesichts verglichen und bei Übereinstimmung die Identität der Person bestätigt. Der Begriff Gesichtserkennung kann sowohl Gesichtsdetektion als auch Gesichtsidentifikation bedeuten und wird daher im Folgenden weitgehend vermieden.

Die Zugangssteuerung steuert im Wesentlichen, zu welchen Daten ein Benutzer Zugang hat und insbesondere, welche Daten für den Nutzer überhaupt sichtbar sind. Eine typische Zugangssteuerung unterscheidet zwischen einem gesperrten Zugang (Zugangssperre), der sich dadurch auszeichnet, dass die gesperrten Daten nicht sichtbar sind, und einem uneingeschränkten Zugang. Die Zugangssperre kann beispielsweise eine Bildschirmsperre sein, welche nur durch eine Authentifizierung des Benutzers aufgehoben werden kann. Bei der Zugangssperre ist der Zugang zu sämtlichen Daten (d.h. privaten und sonstigen Daten) am Endgerät gesperrt. Dementsprechend sind bei aktiver Zugangssperre im Allgemeinen keine der am Endgerät gespeicherten Daten sichtbar. Es besteht allenfalls Zugang zu öffentlichen Statusinformationen (z.B. Uhrzeit, Empfangssignal, etc. werden trotz aktiver Zugangssperre angezeigt und sind somit sichtbar).

Eine derartige Zugangssteuerung ist beispielsweise aus US 8,370,639 B2 bekannt. Darin ist ein Verfahren zur Authentifizierung und kontinuierlichen Verfolgung eines Benutzers (z.B. eines Mobiltelefons) mittels Gesichtserkennung beschrieben. Die Gesichtserkennung kann durch Eingabe anderer Authentifizierungsmerkmale, z.B. eines Passworts, initialisiert werden. Allerdings wird bei dieser Zugangssteuerung nicht zwischen gesperrten und eingeschränktem oder zwischen eingeschränktem und uneingeschränktem Zugang unterschieden: sobald und solange ein Benutzer authentifiziert werden kann, bleibt ein uneingeschränkter Zugang bestehen. Ein zweiter Benutzer, welcher sich in der Nähe des Endgeräts aufhält, erhält somit im Wesentlichen denselben uneingeschränkten Zugang wie der autorisierte Benutzer. Insbesondere können sämtliche angezeigten Daten mitgelesen werden.

Ein ähnliches Verfahren ist auch in der US 8,660,322 B gezeigt. Bei diesem Verfahren wird der Zugang gesperrt, wenn der Benutzer das Sichtfeld einer Kamera verlässt; sobald er wieder erkannt wird, wird wieder der uneingeschränkte Zugang gewährt. Auch hier ist kein eingeschränkter Zugang vorgesehen.

Die US 2017/046507 A1 zeigt ein gattungsgemäßes Verfahren bei dem mit einer Kamera z.B. eines Smartphones kontinuierlich wiederholt ein Bild erfasst und darauf eine Gesichtserkennung angewendet wird. Das Smartphone kann dabei öffentliche Daten ("public data") und private Daten ("private data") speichern. Abhängig vom Ergebnis der Gesichtserkennung werden entweder nur die öffentlichen Daten (eingeschränkter Zugang) oder sämtliche Daten (uneingeschränkter Zugang) angezeigt. Im Einzelnen unterscheidet die Gesichtserkennung zwischen registrierten und unregistrierten Gesichtern und aktiviert den eingeschränkten Zugang, wenn mindestens ein unregistriertes Gesicht festgestellt wird.

Die US 2010/124363 A1 betrifft ein Verfahren zur Steuerung eines Privatsphären-Filters. Dabei handelt es sich um eine hardwareseitige Maßnahme, die den Blickwinkel, unter dem der Bildschirminhalt des zu schützenden Geräts lesbar ist, einschränkt. D. h. es sind immer sämtliche Daten sichtbar, jedoch bei aktivem Privatsphären-Filter nur aus einem schmalen Winkelbereich. In diesem Zusammenhang beschreibt die US 2010/124363 A1, dass mit einer Kamera wiederholt Bilder aufgenommen und einer Gesichtserkennung zugeführt werden, mit der die Anzahl der erkannten Gesichter ermittelt wird. Wenn mehr als ein Gesicht erkannt wird, wird der Privatsphäre-Filter aktiviert.

Bei einem Verfahren der eingangs angeführten Art wird die bei der Gesichtsdetektion ermittelte Anzahl der Gesichter in dem erfassten Bildsignal kontinuierlich überwacht, wobei der Zugang eingeschränkt wird, wenn die Anzahl der Gesichter größer als eins ist. Es kann somit sichergestellt werden, dass der uneingeschränkte Zugang nur so lange gewährt wird, als im Sichtfeld der Kamera (d.h. dem Bereich den die Kamera erfasst) nur eine Person detektiert wird. Sobald das Gesicht einer zweiten Person in das Sichtfeld der Kamera eintritt, wird der Zugang eingeschränkt, d.h. das Endgerät wird auf eingeschränkten Zugang umgestellt. Die Benutzer des Endgeräts haben danach weiterhin Zugang zu den sonstigen, nicht als privat markierten, Daten, welche auf dem Endgerät gespeichert sind. Auf diese Weise wird ein Ausspähen der privaten Daten durch eine zweite Person erschwert. Es können beispielsweise private Kontakte und sämtliche Hinweise auf die Kommunikation mit den privaten Kontakten vor anderen Personen als dem autorisierten Benutzer des Endgeräts geheim gehalten werden. Die Markierung von Daten als privat erfolgt durch den Benutzer und wird am Endgerät abgespeichert. Beispielsweise kann der Benutzer einen existenten Kontakt als "privat" markieren oder er erstellt einen neuen Kontakt mit dem Hinweis "privat". Anschließend behandelt das Endgerät alle mit diesem Kontakt verknüpften Daten als private Daten, z.B. frühere Anrufe, Textnachrichten, E-Mails, Chatnachrichten, die Kontaktinformationen selbst, oder mit dem Kontakt verknüpfte Bilder oder Videos.

Das Endgerät weist einen Bildschirm zur Anzeige von privaten und sonstigen Daten auf. Die privaten Daten werden bei eingeschränktem Zugang vollständig ausgeblendet und nur die sonstigen Daten werden angezeigt. D.h. der Zugang zu den privaten Daten wird nicht lediglich durch Unkenntlichmachung eingeschränkt, sondern in einer Weise, dass bei einem eingeschränkten Zugang kein Hinweis auf die Existenz dieser Daten ersichtlich ist. Insbesondere sollen unautorisierte Benutzer nicht erkennen können, dass sie nur einen eingeschränkten Zugang haben.

In der Diplomarbeit "Confidential Desktop" von Sophie Weiß B.Sc. wird eine Windows-Anwendung vorgeschlagen, die verschiedene konfigurierbare Maßnahmen zum Schutz der Privatsphäre durch Änderung des Bildschirminhalts setzen kann. Unter anderem ist beispielsweise einstellbar, dass abhängig von verschiedenen Auslösern bestimmte Anwendungen geschlossen werden, ein Browserfenster minimiert wird oder ein E-Mail-Client geschlossen wird. Als Auslöser wird unter anderem eine Gesichtserkennung mit einer Webcam von zwei oder mehreren Gesichtern erwähnt.

In diesem Zusammenhang ist es eine Aufgabe der Erfindung, dass berechtigte Benutzer erkennen können, ob der Zugang aktuell eingeschränkt ist, nicht aber nicht berechtigte Benutzer.

Die Erfindung löst diese Aufgabe mit den Merkmalen gemäß Anspruch 1.

Bei uneingeschränktem Zugang wird ein visueller Hinweis auf den uneingeschränkten Zugang angezeigt. Somit kann ein Benutzer bei uneingeschränktem Zugang erkennen, dass nun sowohl sonstige als auch private Daten angezeigt werden und es somit einen vollständigen freien Zugang zu allen Daten hat. Der visuelle Hinweis kann z.B. ein grüner Rahmen am Bildschirm sein. Ein eingeschränkter Zugang ist für den berechtigten Benutzer somit an der Abwesenheit des visuellen Hinweises erkennbar; für den nicht berechtigten Benutzer ist der eingeschränkte Zugang jedoch nicht erkennbar, weil dieser Benutzer den visuellen Hinweis nicht kennt oder erwartet.

Vorzugsweise können bei eingeschränktem Zugang Ereignisse betreffend private Daten in einer eingeschränkten (z.B. zensierten) Form auf dem Bildschirm angezeigt werden. Diese Funktion soll es dem Benutzer ermöglichen, auch bei eingeschränktem Zugang (z.B. wenn das Endgerät nicht oder nicht alleine verwendet wird) auf Ereignisse im Zusammenhang mit privaten Daten (z.B. eine Nachricht von einem privaten Kontakt) hingewiesen zu werden. Beispielsweise kann ein Anruf eines privaten Kontakts als "Unbekannte Nummer" angezeigt werden, wenn z.B. ein Smartphone offen am Tisch liegt.

Im Hinblick auf den Beginn der kontinuierlichen Überprüfung ist es günstig, wenn zum Erlangen des uneingeschränkten Zugangs eine Authentifizierung eines Benutzers durchgeführt wird, wobei vor einer Freigabe des uneingeschränkten Zugangs ein Erfassen eines Bildsignals mit der Kamera des Endgeräts, Durchführen einer Gesichtsdetektion mit dem erfassten Bildsignal und Ermittelten der Anzahl der Gesichter in dem erfassten Bildsignal erfolgt, wobei die Freigabe nur erfolgt, wenn die Anzahl der Gesichter genau eins ist. Selbst bei einer erfolgreichen Authentifizierung wird der uneingeschränkte Zugang nur dann freigegeben, wenn keine Beobachter und potentiellen Mitleser detektiert werden.

In diesem Zusammenhang ist es besonders günstig, wenn die Authentifizierung eine biometrische Authentifizierung, insbesondere eine Gesichtsidentifikation und/oder eine Irisidentifikation umfasst. In diesem Fall können die Authentifizierung und die Ermittlung der Anzahl der Gesichter auf Basis derselben Bilddaten durchgeführt werden. Alternativ oder zusätzlich können selbstverständlich auch andere Faktoren zur Authentifizierung verwendet werden, z.B. ein Passwort oder Fingerabdruck.

Bei einer bevorzugten Variante der vorliegenden Erfindung kann die Gesichtsidentifikation parallel zur Überprüfung der Anzahl der Gesichter regelmäßig oder stichprobenartig wiederholt werden. Dadurch kann sichergestellt werden, dass ein unautorisierter Benutzer, der im gleichen Moment im Sichtfeld der Kamera erscheint, in dem der autorisierte Benutzer das Sichtfeld der Kamera verlässt, uneingeschränkten Zugang erhält.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Dabei zeigen im Einzelnen:
Fig. 1 schematisch den Ablauf einer einfachen Variante des erfindungsgemäßen Verfahrens;
Fig. 2 schematisch den Ablauf einer erweiterten Variante des erfindungsgemäßen Verfahrens;
Fig. 3a schematisch ein mobiles Endgerät bei gesperrtem Zugang;
Fig. 3b schematisch ein mobiles Endgerät bei uneingeschränktem Zugang;
Fig. 3c schematisch ein mobiles Endgerät bei eingeschränktem Zugang;
Fig. 4a schematisch einen Anwendungsfall für einen uneingeschränkten Zugang auf einem mobilen Endgerät; und
Fig. 4b schematisch einen Anwendungsfall für einen eingeschränkten Zugang auf einem mobilen Endgerät.

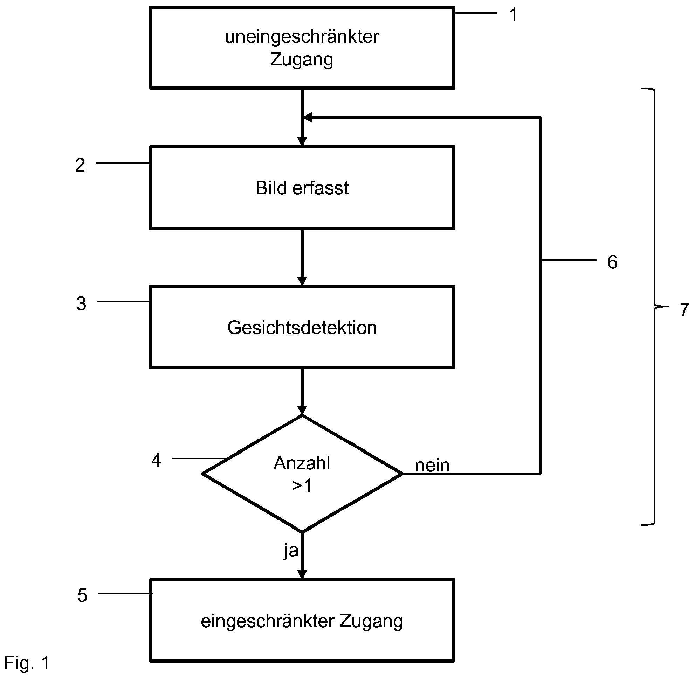

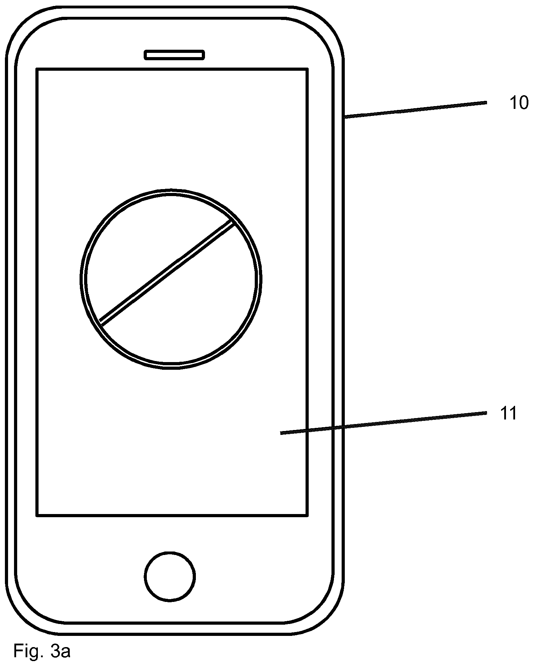

Fig. 1 zeigt den Ablauf eines computerimplementierten Verfahrens zur Zugangssteuerung eines Endgeräts (vgl. Fig. 3a-c). Auf dem Endgerät sind private Daten und sonstige Daten gespeichert. Der Zugang zu den privaten Daten kann eingeschränkt oder uneingeschränkt sein.

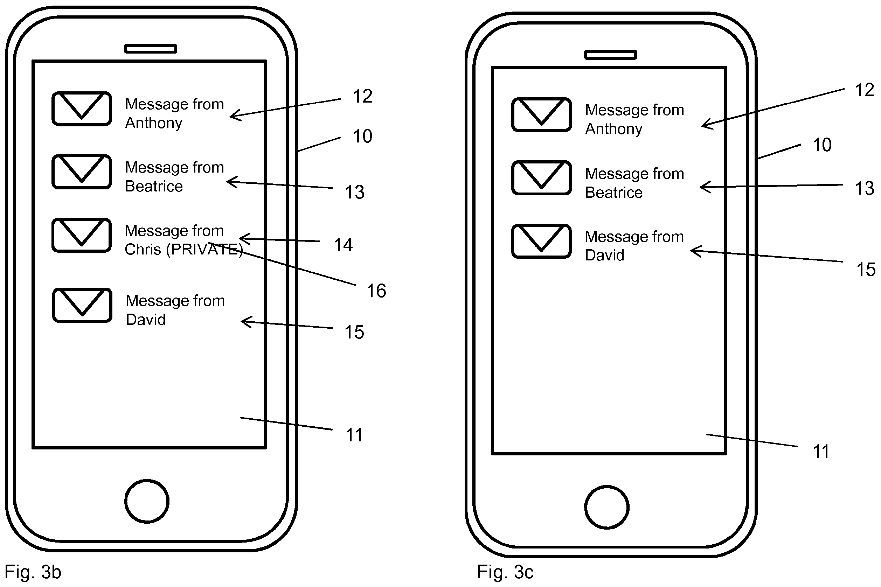

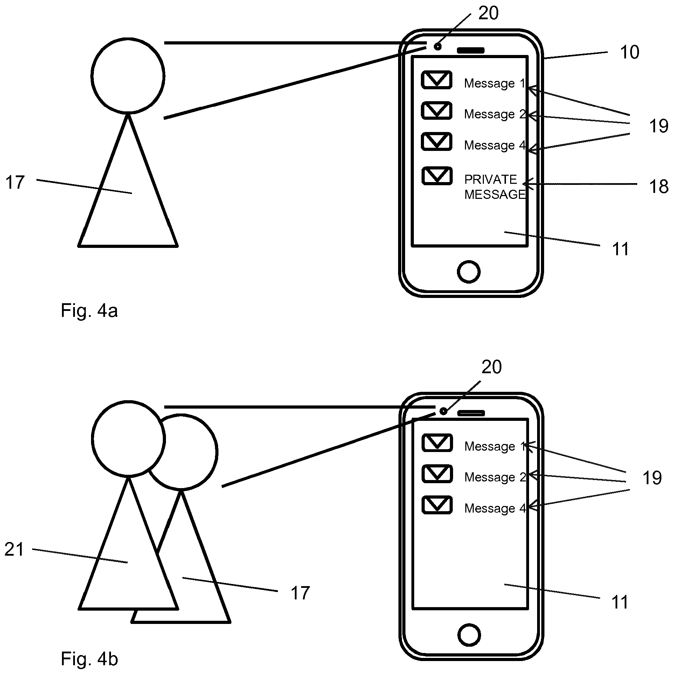

Ausgehend von einem uneingeschränkten Zugang 1 (vgl. Fig. 3b) umfasst das in Fig. 1 gezeigte Verfahren folgende Schritte, welche als Funktionsblock dargestellt sind. Zunächst wird ein Bildsignal mit einer Kamera des Endgeräts erfasst 2 (vgl. Fig. 4a-b). Anschließend wird eine Gesichtsdetektion mit dem erfassten Bildsignal durchgeführt 3. Nach Abschluss der Gesichtsdetektion wird die während der Gesichtsdetektion ermittelten Anzahl der Gesichter in dem erfassten Bildsignal überprüft 4. Falls die Anzahl der Gesichter größer als eins ist (vgl. Fig. 4b), wird der Zugang eingeschränkt 5 (vgl. Fig. 3c). Andernfalls 6 wird das nächste Bildsignal erfasst, sodass während des uneingeschränkten Zugangs eine kontinuierliche Überwachung 7 der Anzahl der Gesichter im Sichtfeld der Kamera erfolgt. Sobald der Zugang eingeschränkt wird, kann die Überwachung abgebrochen werden.

Wenn das Endgerät einen Bildschirm zur Anzeige von privaten und sonstigen Daten aufweist, werden die privaten Daten bei eingeschränktem Zugang vollständig ausgeblendet und nur die sonstigen Daten angezeigt werden. Im Fall des uneingeschränkten Zugangs wird ein visueller Hinweis auf den uneingeschränkten Zugang angezeigt am Bildschirm in Form eines farbigen (z.B. grünen) Rahmens angezeigt. Wenn bei eingeschränktem Zugang ein Ereignis betreffend private Daten eintritt, wird das Ereignis in einer eingeschränkten Form auf dem Bildschirm angezeigt.

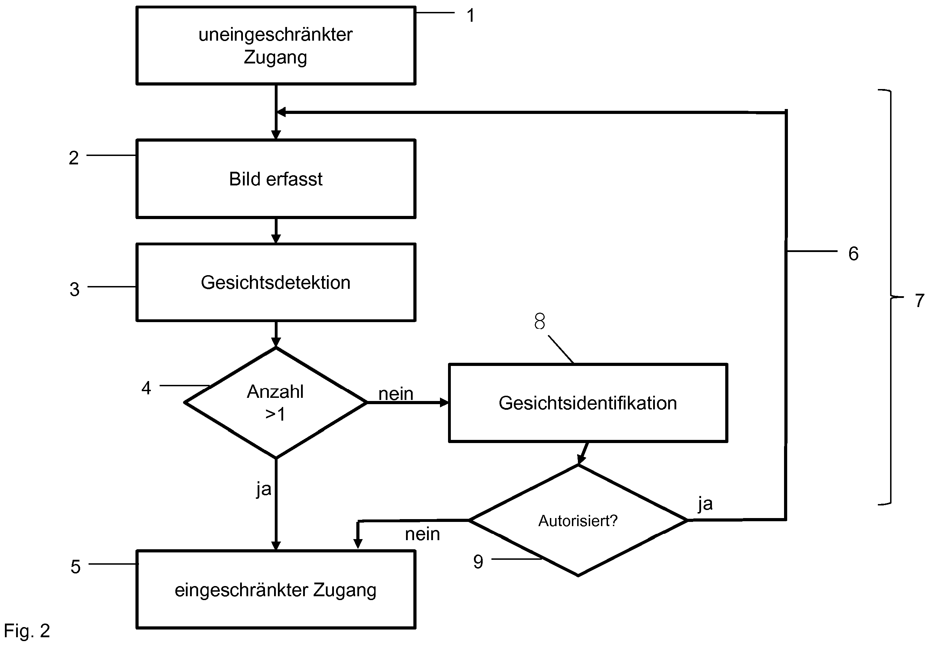

Fig. 2 zeigt eine erweiterte Variante des erfindungsgemäßen Verfahrens. Dabei wird während der Überwachung 7 zusätzlich eine Gesichtsidentifikation 8 durchgeführt. Es folgt eine Überprüfung 9 der Autorisierung des Benutzers. Falls der Benutzer nicht autorisiert ist, wird der Zugang eingeschränkt 5. Die Darstellung in Fig. 2 ist vereinfacht; die Gesichtsidentifikation 8 kann beispielsweise nur stichprobenartig oder z.B. bei jedem zehnten Durchlauf der Überprüfung 7 durchgeführt werden, um die Ressourcen des Endgeräts (CPU-Zeit, Batterie) zu schonen.

Gemäß einer weiteren Variante des erfindungsgemäßen Verfahrens kann zum Erlangen des uneingeschränkten Zugangs eine biometrische Authentifizierung eines Benutzers mit einer Gesichtsidentifikation und optional einer Irisidentifikation durchgeführt werden. Dabei erfolgt vor einer Freigabe des uneingeschränkten Zugangs ein Erfassen eines Bildsignals mit der Kamera des Endgeräts, Durchführen einer Gesichtsdetektion mit dem erfassten Bildsignal und Ermittelten der Anzahl der Gesichter in dem erfassten Bildsignal. Im Anschluss daran erfolgt die Freigabe nur dann, wenn die Anzahl der Gesichter genau eins ist.

In Fig. 3a-c sind die verschiedenen Zustände eines Endgeräts 10 dargestellt, welche im Rahmen der Anwendung des erfindungsgemäßen Verfahrens eingenommen werden können. Das Endgerät 10 ist in diesem Beispiel ein Smartphone mit einem Bildschirm 11. In Fig. 3a ist das Endgerät 10 bei gesperrtem Zugang dargestellt. Am Bildschirm 11 wird ein allgemeines Symbol angezeigt, welches die Zugangssperre symbolisiert und erkennbar macht. In diesem Zustand wird im Allgemeinen kein Zugang zu den am Endgerät 10 gespeicherten Daten gewährt; insbesondere werden keine persönlichen Daten eines Benutzers des Endgeräts angezeigt. Allenfalls können technische Daten (wie Uhrzeit, Signal, Netzinformation, etc.) angezeigt werden. Wenn sich ein berechtigter Benutzer authentisiert, z.B. indem er seine Identität nachweist, und erfolgreich authentifiziert wird, wechselt das Endgerät üblicher Weise direkt in einen Zustand mit uneingeschränktem Zugang zu sämtlichen am Endgerät gespeicherten Daten. Dieser Zustand ist in Fig. 3b dargestellt. In diesem Zustand werden am Bildschirm 11 des Endgeräts 10 Nachrichten von vier Kontakten, namentlich eine erste Nachricht 12 vom Kontakt "Anthony", eine zweite Nachricht 13 vom Kontakt "Beatrice", einer dritte Nachricht 14 vom Kontakt "Chris" und eine vierte Nachricht 15 vom Kontakt "David" angezeigt. Der Kontakt "Chris" ist als privater Kontakt markiert. Die dritte Nachricht 14 ist daher mit dem visuellen Hinweis 16 "PRIVATE" dargestellt; durch den Hinweis 16 kann der Benutzer des Endgeräts 10 erkennen, dass ein uneingeschränkter Zugang gewährt wird.

Sobald im Rahmen des am Endgerät 10 ausgeführten erfindungsgemäßen Verfahrens im Bildsignal einer Kamera mehr als ein Gesicht erkannt wird, wechselt das Endgerät 10 in einen Zustand mit eingeschränktem Zugang. Dieser Zustand ist in Fig. 3c dargestellt. In diesem Zustand werden die erste Nachricht 12, die zweite Nachricht 13 und die vierte Nachricht 15 angezeigt. Die dritte Nachricht 14 stammt von dem als privat markierten Kontakt "Chris" und ist daher ebenfalls als privat markiert und gehört somit zu den privaten Daten. Dementsprechend wird bei dem in Fig. 3c dargestellten eingeschränktem Zugang kein Hinweis auf den Inhalt oder die Existenz der privaten dritten Nachricht 14 angezeigt. Ein Beobachter, welcher zusammen mit dem Benutzer den Bildschirm 11 beobachtet, erfährt daher nicht von der Existenz der dritten Nachricht 14. Nachdem auch der visuelle Hinweis 16 ausgeblendet ist, kann der Beobachter auch nicht erkennen, dass der Zugang derzeit eingeschränkt ist.

Fig. 4a und 4b zeigen die mit den Zuständen gemäß Fig. 3b und 3c korrespondierenden Anwendungsfälle. In Fig. 4a ist ein erster Anwendungsfall gezeigt, in dem ein autorisierter Benutzer 17 das Endgerät 10 verwendet. Das Endgerät 10 wurde bereits entsperrt und befindet sich in einem Zustand mit uneingeschränktem Zugang zu privaten Daten 18 und sonstigen Daten 19. Mit einer Frontkamera 20 des Endgeräts 10, welche auf derselben Seite wie der Bildschirm 11 angeordnet ist, wird wiederholt ein Bild erfasst und die Anzahl der Gesichter in dem erfassten Bild erkannt (vgl. Fig. 1). Im ersten Anwendungsfalls befindet sich nur der autorisierte Benutzer 17 im Sichtfeld der Frontkamera 20, sodass bei jeder Überprüfung nur ein Gesicht erkannt wird und somit der uneingeschränkte Zugang aufrechterhalten wird.

In Fig. 4b ist ein zweiter Anwendungsfall gezeigt. Dabei tritt ein Beobachter 21 dem autorisierten Benutzer 17 zur Seite und in das Sichtfeld der Frontkamera 20. Die Überprüfung erkennt sofort, dass die Anzahl der erkannten Gesichter größer als eins ist, und versetzt das Endgerät 10 in den Zustand mit eingeschränktem Zugang (vgl. Fig. 3c). Es werden am Bildschirm nur noch die sonstigen Daten 19 angezeigt. Alle privaten Daten 18 wurden von der Anzeige ausgeblendet, sodass deren Existenz und Inhalt vor dem Beobachter 21 verborgen ist.

## Patentansprüche

1. Computerimplementiertes Verfahren zur Zugangssteuerung eines Endgeräts, wobei auf dem Endgerät private Daten und sonstige Daten gespeichert sind und ein Zugang zu den privaten Daten eingeschränkt oder uneingeschränkt sein kann, umfassend die folgenden Schritte bei uneingeschränktem Zugang (1):
- Erfassen (2) eines Bildsignals mit einer Kamera des Endgeräts;
- Durchführen (3) einer Gesichtsdetektion mit dem erfassten Bildsignal; und
- kontinuierliches Überwachen (4) der bei der Gesichtsdetektion ermittelten Anzahl der Gesichter in dem erfassten Bildsignal, wobei der Zugang eingeschränkt wird (5), wenn die Anzahl der Gesichter größer als eins ist,
wobei das Endgerät einen Bildschirm zur Anzeige von privaten und sonstigen Daten aufweist und die privaten Daten bei eingeschränktem Zugang (5) vollständig ausgeblendet werden und nur die sonstigen Daten angezeigt werden,
**dadurch gekennzeichnet, dass** bei uneingeschränktem Zugang (1) ein visueller Hinweis auf den uneingeschränkten Zugang angezeigt wird.

2. Verfahren gemäß Anspruch 1, **dadurch gekennzeichnet, dass** bei eingeschränktem Zugang (5) Ereignisse betreffend private Daten in einer eingeschränkten Form auf dem Bildschirm angezeigt werden.

3. Verfahren gemäß Anspruch 1 oder 2, **dadurch gekennzeichnet, dass** zum Erlangen des uneingeschränkten Zugangs (1) eine Authentifizierung eines Benutzers durchgeführt wird, wobei vor einer Freigabe des uneingeschränkten Zugangs (1) ein Erfassen eines Bildsignals mit der Kamera des Endgeräts, Durchführen einer Gesichtsdetektion mit dem erfassten Bildsignal und Ermittelten der Anzahl der Gesichter in dem erfassten Bildsignal erfolgt, wobei die Freigabe nur erfolgt, wenn die Anzahl der Gesichter genau eins ist.

4. Verfahren gemäß Anspruch 3, **dadurch gekennzeichnet, dass** die Authentifizierung eine biometrische Authentifizierung, insbesondere eine Gesichtsidentifikation und/oder eine Irisidentifikation umfasst.

5. Computerprogrammprodukt, das direkt in den internen Speicher eines digitalen Computers geladen werden kann und Softwarecodeabschnitte umfasst, mit denen die Schritte gemäß einem der Ansprüche 1 bis 4 ausgeführt werden, wenn das Computerprogramm auf einem Computer läuft.

## Claims

1. Computer-implemented method for the access control of a terminal, private data and other data being stored on the terminal and access to the private data being able to be limited or unlimited, comprising the following steps in the case of unlimited access (1):
- capturing (2) an image signal by means of a camera of the terminal;
- performing (3) a face detection process with the captured image signal;
and
- continuous monitoring (4) of the number of faces detected in the detected image signal during the face detection process, wherein access is limited (5) if the number of faces is greater than one,
wherein the terminal comprises a screen for displaying private data and other data and the private data is completely hidden when access is limited (5) and only the other data is displayed, **characterised in that** a visual indication of the unlimited access is displayed when access is unlimited (1).

2. Method according to Claim 1, **characterized in that**, in the case of limited access (5), events pertaining to private data are displayed on the screen in a limited form.

3. Method according to one of the Claims 1 or 2, **characterized in that** an authentication of a user is performed in order to obtain unlimited access (1), wherein, before the unlimited access (1) is granted, an image signal is captured using the camera of the terminal, a face detection process is carried out using the captured image signal and a determination of the number of faces in the captured image signal is carried out, wherein unlimited access is only granted if the number of faces is exactly one.

4. Method according to Claim 3, **characterized in that** the authentication comprises biometric authentication, in particular, face identification and/or iris identification.

5. Computer program product that can be loaded directly into the internal memory of a digital computer and comprises software code sections, by means of which the steps are carried out according to one of Claims 1 to 4 when the computer program is running on a computer.

## Revendications

1. Procédé mis en oeuvre par ordinateur pour le contrôle d'accès d'un terminal, dans lequel des données privées et d'autres données sont stockées sur le terminal et un accès aux données privées peut être restreint ou non restreint, comprenant les étapes suivantes dans le cas d'un accès sans restriction (1) :
- l'acquisition (2) d'un signal d'image avec une caméra du terminal ;
- la réalisation (3) d'une détection du visage avec le signal d'image acquis ; et
- la surveillance en continu (4) du nombre des visages déterminé lors de la détection du visage dans le signal d'image acquis, dans lequel l'accès est restreint (5) lorsque le nombre des visages est supérieur à 1,
dans lequel le terminal présente un écran pour l'affichage de données privées et autres et les données privées dans le cas d'un accès restreint (5) sont entièrement masquées et seules les autres données sont affichées,
**caractérisé en ce que** dans le cas d'un accès sans restriction (1) une indication visuelle de l'accès sans restriction est affichée.

2. Procédé selon la revendication 1, **caractérisé en ce que** dans le cas d'un accès restreint (5) des événements concernant les données privées sont affichés sur l'écran sous une forme restreinte.

3. Procédé selon la revendication 1 ou 2, **caractérisé en ce que** pour obtenir l'accès sans restriction (1) une authentification d'un utilisateur est réalisée, dans lequel avant une autorisation de l'accès sans restriction (1) il s'effectue une acquisition d'un signal d'image avec la caméra du terminal, une réalisation d'une détection du visage avec le signal d'image acquis et une détermination du nombre des visages dans le signal d'image acquis, dans lequel l'autorisation ne s'effectue que lorsque le nombre des visages est exactement un.

4. Procédé selon la revendication 3, **caractérisé en ce que** l'authentification comprend une authentification biométrique, en particulier une identification du visage et/ou une identification de l'iris.

5. Produit-programme d'ordinateur, qui peut être téléchargé directement dans la mémoire interne d'un calculateur numérique et comprend des parties de code logiciel, avec lesquelles les étapes sont mises en oeuvre selon l'une quelconque des revendications 1 à 4, lorsque le programme d'ordinateur s'exécute sur un ordinateur.
